**Europäisches Patentamt**

**European Patent Office**

**Office européen des brevets**

(19)

(11) Veröffentlichungsnummer: **0 321 564**
**A1**

## (12) EUROPÄISCHE PATENTANMELDUNG

veröffentlicht nach Art. 158 Abs. 3 EPÜ

(21) Anmeldenummer: **87905558.0**

(22) Anmeldetag: **14.05.87**

Daten der zugrundeliegenden internationalen Anmeldung:

(86) Internationale Anmeldenummer:
**PCT/SU 87/00055**

(87) Internationale Veröffentlichungsnummer:
**WO 88/09081 (17.11.88 88/25)**

(51) Int. Cl.⁴: **H 02 K 29/06, H 02 P 6/02**

(43) Veröffentlichungstag der Anmeldung: **28.06.89**
**Patentblatt 89/26**

(84) Benannte Vertragsstaaten: **BE DE FR GB IT**

(71) Anmelder: **BELORUSSKY GOSUDARSTVENNY
UNIVERSITET IMENI V.I.LENINA, Leninsky pr., 4,
Minsk, 220080 (SU)**

(72) Erfinder: **MATJUKHINA, Ljudmila Ivanovna, ul.
Kuznechnaya, 3-92, Minsk, 220039 (SU)**
Erfinder: **MIKHALEV, Alexandr Sergeevich, ul.
Kuznechnaya, 3-92, Minsk, 220039 (SU)**
Erfinder: **SIDORUK, Sergei Nikolaevich, ul.
Kurchatova, 6-814, Minsk, 220106 (SU)**
Erfinder: **CHUSHENKOV, Igor Mikhailovich, pr.
Partizansky, 74-25, Minsk, 220021 (SU)**

(74) Vertreter: **Ebbinghaus, Dieter et al, Patentanwälte v.
Füner, Ebbinghaus, Finck Mariahilfplatz 2 & 3,
D-8000 München 90 (DE)**

(54) **ELEKTRISCHER ANTRIEB VOM GLEICHRICHTERTYP.**

(57) Im Stromrichterantrieb ist der Wellenlagegeber (2) der
Synchronmaschine mit dem Adresseneingang eines Festspeichers (10) elektrisch verbunden. Der Ausgangsbus des Festspeichers (10) ist an die Steuereingänge (11) von Kode-Impulsdauer-Wandlern (12) entsprechend der Zahl von Wicklungen
der Synchronmaschine angeschlossen, deren Ausgänge mit
den Eingängen (17) zur Vorgabe der Impulsdauer von entsprechenden Schaltern (18) verbunden sind. Bei den letzteren liegen die Eingänge (26) zur Vorgabe der Impulspolarität an den
entsprechenden Ausgängen des Festspeichers (10) und die
Ausgänge an den Wicklungen der Synchronmaschine (1). Der
Antrieb enthält auch einen Spannungs-Impulsfolgeperiode-
Wandler (34), bei dem der Eingang (35) an eine ebenfalls mit
den Schaltern (18) verbundene Spannungsquelle (25) angeschlossen ist, der andere Eingang (33) am Ausgang eines
Steuergenerators (32) liegt, der auch mit dem Eingang (31) eines gesteuerten Frequenzteilers (28) verbunden ist, und der
Ausgang an die Eingänge (36) zur Aktivierung der Kode-Im-
pulsdauer-Wandler (12) geschaltet ist. Dem Steuereingang (29)
des Frequenzteilers (28) wird der Kode des Steuersignalbetrags zugeführt. Der Ausgang des Frequenzteilers (28) ist an
die Eingänge (30) zur Impulsfrequenzvorgabe der Wandler (12)
angeschlossen.

ACTORUM AG

# 1

## STROMRICHTERANTRIEB

## Gebiet der Technik

Die Erfindung betieht sich auf elektrische Maschinen, insbesondere auf Stromrichterantriebe, die in numerisch gesteuerten Stellmechanismen verschiedener Zweckbestimmung verwendet werden.

## Stand der Technik

Hohe Zuverlässigkeit und flexible Steuerung von Synchronmaschinen bedingen ihre perspektivische Anwendung in Präzisions-Stromrichterantrieben automatischer Einrichtungen, die gegenwärtig in verschiedenen Gebieten der Technik benutzt werden.

Bei den bekannten Stromrichterabtrieben sind jedoch keine Mittel zur Kompensation von Drehmomentpulsationen vorgesehen, die infolge von Schwankungen der Speisespannung, von Widerstandsänderungen in den Speisestromkreisen, von endlichem Innenwiderstand der realen Spannungsquellen sowie bei Reversierung auftreten. Infolgedessen verringert sich der Bereich der Geschwindigkeitsregelung und erhöhen sich die Geschwindigkeitspulsationen. Ausserdem nimmt die Steilheit der mechanischen Kennlinien ab, wobei die Positions- und Geschwindigkeitsregelung bei den Synchronmaschinen komplizierter wird.

Es ist ein Stromrichterantrieb bekannt, der einen Wellenlagegeber und einen Festwertspeicher enthält, bei dem die Adresseneingänge mit den Ausgängen einer Steuereinheit und die entsprechenden Ausgänge mit den Eingängen von Komparatoren nach der Anzahl von Wicklungen der Synchronmaschine verbunden sind. Die Ausgänge der Komparatoren sind an die Engänge eines Schalters angeschlossen, der die Wicklungen der Synchronmaschine an eine Spannungsquelle schaltet (SU, A, 1144201). Infolge von Variationen des Drehmoments bei Reversierung und wegen fehlender Mittel zur Kompensation der Pulsationen und der Drift der Speisespannung sowie als Folge der veränderlichen Frequenz der Impulsbreitenmodulation der Spannung an den Wicklungen der Synchronmaschine ist der Bereich der Geschwindigkeitsregelung der Maschine bei der beschriebenen Schaltung begrenzt. Bei endlichem Innenwiderstandswert der Spannungsquelle im realen elektrischen Antrieb ist ausserdem die Steilheit der mechanischen Kennlinien nicht genügend hoch.

Die erwähnten Mängel sind teilweise in einem Stromrichterantrieb beseitigt, der eine Synchronmaschine mit einem Wellenlagegeber enthält, dessen Ausgang mit dem Adresseneingang eines Festwertspeichers elektrisch verbunden ist, in dem die Kodes der Dauer und der Polarität von Impulsen zur Speisung der Wicklungen der Synchronmaschine eingeschrieben sind. Der Ausgangsbus des Festwertspeichers ist an die Steuereingänge von Kode-Impulsdauer-Wandlern entsprechend der Zahl von Wicklungen der Synchronmaschine angeschlossen. Die Ausgänge der Wandler liegen an den Eingängen zur Vorgabe der Impulsdauer eines Schalters, dessen andere Eingänge zur Vorgabe der Impulspolarität mit den entsprechenden Ausgängen des Festwertspeichers verbunden sind und dessen Eingänge zur Vorgabe der Steuersignalpolarität zusammengeschaltet sind und zur Anlegung eines die Steuersignalpolarität bezeichnenden Signals dienen, während die Ausgänge des Schalters an die Wicklungen der Synchronmaschine angeschlossen sind. Der Stromrichterantrieb enthält auch einen Steuergenerator, bei dem der Ausgang am Eingang eines gesteuerten Frequenzteilers liegt, auf dessen Steuereungang der Kode des Steuersignalbetrags gegeben wird, und bei dem der Ausgang an die Eingänge zur Impulsfrequenzvorgabe der Kode-Impulsdauer-Wandler angeschlossen ist. Zum Antrieb gehört auch eine an den Schalter angeschlossene Spannungsquelle (SU, A, 1244779).

Bei diesem Stromrichterantrieb treten auch Variationen des Drehmomentwertes bei Reversierung infolge fehlender Mittel zur Kompensation der Pulsationen und der Drift der Speisespannung auf, sie sind aber kleiner als bei dem vorher beschriebenen elektrischen Antrieb, da die Frequenz der Impulse zur Speisung von Wicklungen konstant ist. Infolge des enlichen Innenwiderstandes der Speisequelle ist die Steilheit der mechanischen Kennlinien des elektrischen Antriebs ebenfalls nicht hoch.

Offenbarung der Erfindung

Der Erfindung liegt die Aufgabe zugrunde, einen Stromrichterantrieb zu entwickeln, in dem die Kompensation von Abweichungen der den Wicklungen der Synchronmaschine zugeführten Spannung vom vorgegebenen Wert durch Einführung einer Rückkopplung gewährleistet wird.

Diese Aufgabe wird dadurch gelöst, dass in einem Stromrichterantrieb mit einer Synchronmaschine und einem Wellenlagegeber, dessen Ausgang mit dem Adresseneingang eines Festwertspeichers elektrisch verbunden ist, in welchem die Kodes der Dauer und der Polarität von Impulsen zur Speisung der Wicklungen der Synchronmaschine eingeschrieben sind und dessen Ausgangsbus an die Steuereingänge von Kode-Impulsdauer-Wandlern entsprechend der Zahl von Wicklungen der Synchronmaschine angeschlossen ist, deren Ausgänge an den Eingängen zur Vorgabe der Impulsdauer von Schaltern nach der Zahl von Wicklungen der Synchronmaschine liegen, bei denen die Eingänge zur Vorgabe der Impulspolarität mit den entsprechenden Ausgängen des Festwertspeichers verbunden sind und bei denen die Eingänge zur Vorgabe der Steuersignalpolarität zusammengeschaltet sind und zur Anlegung eines die Steuersignalpolarität kennzeichnenden Signals dienen, während die Ausgänge der Schalter an die Wicklungen der Synchronmaschine angeschlossen sind, sowie mit einem zur Schaltung des Antriebs gehörenden Steuergenerator, bei dem der Ausgang am Eingang eines gesteuerten Frequenzteilers liegt, auf dessen Steuereingang der Kode des Steuersignalbetrags gegeben wird und bei dem der Ausgang an die Eingänge zur Impulsfrequenzvorgabe der Kode-Impulsdauer-Wandler angeschlossen ist, und auch mit einer an die Schalter angeschlossenen Spannungsquelle, – erfindungsgemäss ein Spannungs-Impulsperiode-Wandler eingebaut ist, bei welchem der erste Eingang an der Spannungsquelle liegt, der zweite Eingang an den Ausgang des Steuergenerators angeschlossen ist und der Ausgang mit den Eingängen zur Aktivierung der Kode-Impulsdauer-Wandler verbunden ist.

Im Stromrichterantrieb kann der Spannungs-Impulsfolgeperiode-Wandler zweckmässigerweise einen Analog-Digital-Wandler enthalten, desse, Eingang als erster Eingang des Spannungs-Impulsfolgeperiode-Wandlers benutzt wird, sowie einen gesteuerten Frequenzteiler besitzen, bei dem der Steuereingang am Ausgang des Analog-Digital-Wandlers liegt und der andere Eingang sowie der Ausgang als zweiter Eingang bzw. als Ausgang des Spannungs-Impulsfolgeperiode-Wandlers dienen.

Der Stromrichterantrieb ermöglicht die Beseitigung der durch Spannungsschwankungen am Ausgang der Spannunsquelle hervorgerufenen Pulsationen des Drehmoments der Synchronmaschine. Dadurch erweitert sich der Bereich der Geschwindigkeitsregelung der Synchronmaschine und verringern sich die Geschwindigkeitspulsationen. Infolge höherer Steilheit der mechanischen Kennlinien des Stromrichterantriebs vereinfachen sich ausserdem die Wellenlageregelung und die Drehgeschwindigkeitsregelung in der Synchronmaschine.

## Kurze Beschreibung der Zeichnungen

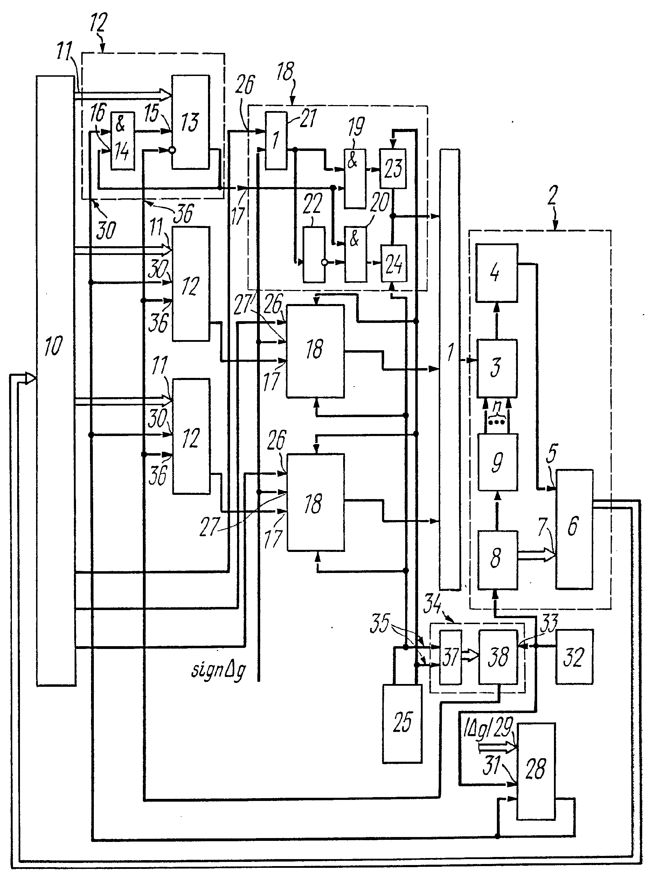

Die Erfindung wird in der nachstehenden Beschreibung einer konkreten Variante ihrer Ausführung und anhand der beigefügten Zeichnung näher erläutert, in der ein funktionales Blockschaltbild des Stromrichterantriebs gemäss der Erfindung dargestellt ist.

Bevorzugte Ausführungsvariante der Erfindung

Der Stromrichterantrieb enthält eine Synchronmaschine 1 mit einem Wellenlagegeber 2. In der zu behandelnden Ausführungsvariante ist der Wellenlagegeber 2 in der Digitaltechnik aufgebaut und enthält einen Phasenschieber 3, dessen Ausgang an den Eingang eines Nullorgans 4 angeschlossen ist, bei welchem der Ausgang am Eingang zur Schreibfreigabe eines Registers 6 liegt. Bei diesem ist der Dateneingang 7 mit dem Ausgang eines Frequenzteilers 8 verbunden, der z.B. auf der Basis eines Addierzählers aufgebaut wird. Der andere Ausgang des Frequenzteilers 8 ist an den Eingang einer Mehrphasen-Spannungsquelle 9 angeschlossen, deren n Ausgänge an die Eingänge des Phasenschiebers 3 geschaltet ist.

Bei dem Wellenlagegeber 2 ist der Ausgang, den der Ausgang des Registers 6 bildet, an den Adresseneingang eines Festspeichers IO angeschlossen, in dem die Kodes der Dauer und der Polarität von Impulsen zur Speisung der Wicklungen der Synchronmaschine I gespeichert sind. Bei Benutzung eines Wellenlagegebers der Synchronmaschine mit einem analogen Ausgangssignal wird dieser Geber mit dem Eingang des Festspeichers IO über einen Analog-Digital-Wandler elektrisch verbunden.

Der Ausgangsbus des Festwertspeichers IO ist an die Steuereingänge II von Kode-Impulsdauer-Wandlern I2 angeschlossen, deren Anzahl der Zahl von Wicklungen der Synchronmaschine - in der vorliegenden Variante drei Wicklungen - entspricht. Jeder Wandler I2 enthält in dieser Variante einen Subtraktionszähler I3, dessen Einstelleingang als Steuereingang II des Wandlers I2 dient, sowie ein logisches UND-Glied I4 mit zwei Eingängen, dessen Ausgang am Subtraktionseingang I5 des Subtraktionszählers I3 liegt. Der zum Borgen bestimmte invertierende Ausgang des Subtraktionszählers I3 ist an den Ein-

gang I6 des lodischen UND-Gliedes I4 angeschlossen und bildet den Ausgang des Wandlers I2. Zur Vereinfachung der Blockschaltung des Stromrichterantriebs ist in der Zeichnung nur ein Wandler I2 gezeigt.

Die Ausgänge aller Wandler I2 liegen an den Eingängen I7 zur Impulsdauervorgabe der Schalter I8, deren Anzahl der Zahl von Wicklungen der Synchronmaschine I entspricht. In dieser Ausführungsvariante enthält jeder Schalter I8 zwei logische UND-Glieder I9, 20 mit zwei Eingängen, bei denen die ersten Eingänge zusammengeschaltet sind und den Eingang I7 des Schalters I8 bilden. Der zweite Eingang des logischen UND-Gliedes I9 liegt am Ausgang eines logischen Exklusiv-ODER-Gliedes 2I, welches ausserdem an den Eingang eines Invertors 22 angeschlossen ist. Der Ausgang des letzteren ist mit dem zweiten Eingang des logischen UND-Gliedes 20 verbunden. Die Ausgänge der logischen UND-Glieder I9, 20 sind an die Steuereingänge von Schaltern 23, 24 geführt, bei denen die Starkstromeingänge an eine Spannungsquelle 25 angeschlossen sind, während die Ausgänge zusammengeschaltet sind und den Ausgang des Schalters I8 bilden, der mit der entsprechenden Wicklung der Synchronmaschine I verbunden ist (in der Zeichnung nicht gezeigt).

Der erste Eingang des logischen Exklusiv-ODER-Gliedes 2I dient als Eingang 26 zur Impulspolaritätsvorgabe des Schalters I8 und ist an den entsprechenden Ausgang des Festspeichers IO angeschlossen, während der zweite Eingang des logischen Gliedes 2I den Eingang 27 zur Vorgabe der Steuersignalpolarität bildet, auf den das Signal sign Δ g gegeben wird, welches die Polarität des Steuersignals kennzeichnet. Die Eingänge 27 aller Schalter I8 sind zusammengeschaltet. Zur Vereinfachung des Blockschaltbildes des Stromrichterantriebs ist in der Zeichnung nur ein Schalter I8 dargestellt.

Der Stromrichterantrieb enthält auch einen gesteuerten Frequenzteiler 28, dessen Funktion in dieser Ausführungsvariante ein Subtraktionszähler erfüllt, bei
dem der Einstelleingang als Steuereingang 29 des Frequenzteilers 28 dient. Dem Steuereingang 29 wird der
Kode des Steuersignalbetrags ( $\Delta$ g) zugeführt. Der Ausgang des gesteuerten Frequenzteilers 28, welchen der
mit dem Schreibeingang des Subtraktionszählers verbundene Ausgang zum Borgen dieses Zählers bildet, ist an
die Eingänge 30 zur Impilsfrequenzvorgabe der Kode-Impulsdauer-Wandler I2 angeschlossen. Den Eingang 30 bildet der zweite Eingang des logischen UND-Gliedes I4. Der
Eingang 3I des gesteuerten Frequenzteilers 28, dessen
Funktion der Subtraktionseingang des Subtraktionszählers
erfüllt, liegt am Ausgang des Steuergenerators 32.

Der Ausgang des Steuergenerators 32 ist auch mit
dem Eingang 33 eines Spannungs-Impulsfolgeperiode-Wandlers 34 verbunden, bei dem der Eingang 35 an die Spannungsquelle 25 und der Ausgang an die Eingänge 36 zur
Auslösung der Kode-Impulsdauer-Wandler I2 angeschlossen
sind. Den Eingang 36 bildet der Schreibeingang des Subtraktionszählers I3.

Der Spannungs-Impulsfolgeperiode-Wandler 34, der im
Stromrichterantrieb eigentlich die Rückkopplung bewirkt,
enthält einen Analog-Digital-Wandler 37, dessen Eingang
als Eingang 35 des Wandlers 34 dient, sowie einen gesteuerten Frequenzteiler 38, bei dem der Steuereingang
am Ausgang des Analog-Digital-Wandlers 37 liegt und der
andere Eingang sowie der Ausgang den Eingang 33 bzw. den
Ausgang des Wandlers 34 bilden.

Der gesteuerte Frequenzteiler 38 kann ähnlich dem
gesteuerten Frequenzteiler 28, d.h. auf der Basis eines
Subtraktionszählers aufgebaut werden, dessen zum Borgen
bestimmter Ausgang an den Schreibeingang angeschlossen
wird.

Da in der beschriebenen Schaltung des Wellenlagegebers 2 der Frequenzteiler 8 benutzt wird, ist die Anwendung eines Impulsgenerators erforderlich. Deswegen wird als Impulsgenerator der Steuergenerator 32 benutzt, dessen Ausgang an den Eingang des Frequenzteilers 8 angeschlossen ist.

Der Stromrichterantrieb funktioniert wie folgt. Mit Hilfe des Frequenzteilers 8 des Wellenlagegebers 2 der Synchronmaschine wird die Frequenz des Steuergenerators 32 durch $2^n$, also $f_o/2^n$ geteilt, wobei n die Stellenzahl des Zählers ist, auf dessen Grundlage der Frequenzteiler 8 aufgebaut ist. Nach dem Ausgangssignal des Teilers 8 erzeugt die Mehrphasen- Spannungsquelle 9 gegeneinander phasenverschobene z.B. sinusförmige Signale mit einer Frequenz $f_o/2^n$, die der mehrphasigen Wicklung des Phasenschiebers 3 zugeführt werden, dessen Rotor mit der Welle der Synchronmaschine 1 verbunden ist (in der Zeichnung nicht gezeigt). Das Ausgangssignal des Phasenschiebers 3 gelagt an das Nullorgan 4, welches an seinem Ausgang Rechteckimpulse erzeugt. Nach den Vorderflanken dieser dem Eingang 5 des Registers 6 zugeführten Impulse wird der vom Frequenzteiler 8 gelieferte Wellenlagekode ins Register 6 eingelesen. Dieser Kode wird durch die Lage des Rotors der Synchronmaschine 1 bestimmt und legt die Orientierung des Magnetfeldes im Stator z.B. perpendikulär zum Magnetfeld des Rotors fest, wobei das maximale Drehmoment der Synchronmaschine 1 erreicht wird. Der Wellenlagekode gelangt an den Adresseneingang des Festwertspeichers IO, in dem die Kodes der Dauer von Impulsen $N_1$ zur entsprechenden Speisung der drei Phasenwicklungen der Synchronmaschine 1 gespeichert sind (hierbei bedeutet i die Phasennummer), sowie die Kodes der Polarität dieser Impulse eingeschrieben sind, die das Senkrechtstehen der Magnetfelder des Stators und des Rotors bei allen ins Register 6 eingetragenen Lagekodes sowie minimale Drehmomentpulsationen gewährleisten. Die K-stelligen Kodes der Dauer von Speiseimpulsen $N_i$ werden in die Subtraktionszähler I3 der Kode-Impulsdauer-Wandler I2 eingetragen, wobei ihre Eintragungsfrequenz

$$f = f_o/K_u \qquad (1)$$

ist. Darin bedeutet $K_u$ den Kode der Ausgangsspannung des Analog-Digital-Wandlers 37 im Spannungs-Impulsfolgeperiode-Wandler 34. Die Beziehung (1) wird durch Herabsetzung der Frequenz des Steuergenerators 32 um das $K_u$-fache vom gesteuerten Frequenzteiler 38 des Wandlers 34 realisiert.

Die Eintragung des Kodes in die Subtraktionszähler I3 erfolgt nach der Ankunft der Vorderflanke des Ausgangssignals des gesteuerten Frequenzteilers 38 am Schreibeingang 36 der Wandler I2. Nach dem Einlesen der Kodes erschienen an den zum Borgen bestimmten Ausgängen der Zähler I3 die logischen Eins-Signale, die den Anfang der Impulse zur Speisung der Wicklungen festlegen. Dabei erscheinen die logischen Einsen auch an den Eingängen I6 der logischen UND-Glieder I4 und erlauben dadurch den Durchgang der Impulse vom Ausgang des gesteuerten Frequenzteilers 28 zu den Subtraktionseingängen I5 der Zähler I3. Die Frequenz dieser Impulse beträgt $f_o/|\Delta g|$, wobei $|\Delta g|$ der Kode des Steuersignalbetrags bedeutet, der dem Steuereingang 29 des Teilers 28 von einer peripheren Einrichtung zugeführt wird. Deswegen liegen die Eins-Signale an den Borgausgängen der Subtraktionszähler I3 während der Zeitintervalle $t_i$, wobei

$$t_i = N_i \, |\Delta g|/f_o \qquad (2)$$

ist.

Wenn der Kode am Ausgang der Subtraktionszähler I3 gleich Null wird, nimmt das Signal zum Borgen den logischen Nullwert an, wobei die Ankunft der Impulse an den Subtraktionseingängen der Zähler I3 über die logischen

UND-Glieder I4 blockiert wird.

Die Reversierung der Synchronmaschine 1 erfolgt durch Invertierung der Polarität der von den entsprechenden Ausgängen des Festwertspeichers IO zugeführten Impulse zur Speisung der Wicklungen der Synchronmaschine 1 mit Hilfe der zu den Schaltern I8 gehörenden logischen Exklusiv-ODER-Glieder 21. Im Ergebnis der Invertierung und der Änderung der Polarität des sign $\Delta g$ -Signals werden die von den Ausgängen der Wandler I2 an die Eingänge I7 zur Impulsdauervorgabe der Schalter I8 gelieferten Signale, die vorher z.B. an die Schalter 23 über die logischen UND-Glieder I9 durchgegeben wurden, nun an die Steuereingänge der Schalter 24 über die logischen UND-Glieder 20 gelangen. Dabei werden die Wicklungen der Synchronmaschine an den anderen Pol der Spannungsquelle 25 angeschlossen. Dadurch wird die Invertierung des Drehmoments der Synchronmaschine bei ihrer Reversierung ohne Änderung seines Moduls und somit die Beseitigung der Drehmomentvariationen möglich.

Da die Frequenz der Impulse zur Speisung von Wicklungen der Synchronmaschine 1 der Frequenz f aus Gleichung (1) entspricht, kann der Mittelwert der Spannung an der i-ten Wicklung bei Berücksichtigung der Gleichung (2) aus dem Ausdruck

$$U_i = t_i \cdot f \cdot U = \frac{N_i \cdot |\Delta g| \cdot f}{f_0} \cdot U = \frac{N_i \cdot |\Delta g|}{K_u} \quad (3)$$

ermittelt werden. Dabei ist U die Ausgangsspannung der Spannungsquelle 25.

Folglich ist der Mittelwert der Spannung $U_i$ an der i-ten Wicklung von der Speisespannung U unabhängig (bei der Bedingung, dass $U_i < U$ ist). Die Pulsationen und die Drift von U, die am Ausgang der Spannungsquelle 25 immer auftreten, welche einen Wechselstrom-Gleichstrom-Umformer durch die Wechselstromgleichrichtung und Siebung darstellt, haben keinen Erfluss auf das Drehmoment der Synchronmaschine 1.

Die Spannungsquelle 25 hat immer einen endlichen Innenwiderstand, an dem beim Stromdurchfluss die Spannung abfällt und dadurch die an die Wicklungen der Synchronmaschine angelegte Spannung abnimmt. Infolge des vorhandenen Spannungs-Impulsperiode-Wandlers 34 wird die Folgeperiode der Impulse zur Speisung von Wicklungen entsprechend der Beziehung (1) verkürzt, wobei die Beeinflussung der Rotationsgeschwindigkeit der Synchronmaschine 1 durch das Lastmoment herabgesetzt wird, d.h. die Steilheit der mechanischen Kennlinien des Stromrichterantriebs erhöht wird. Die Erhöhung der Steilheit der mechanischen Kennlinien setzt die elektromechanische Zeitkonstante des Stromrichterantriebs herab und vereinfacht seine Lage- und Geschwindigkeitsregelung.

## Gewerbliche Anwendbarkeit

Die Erfindung kann für numerisch gesteuerte Stellmechanismen verschiedener Anwendung benutzt werden.

PATENTANSPRUCHE

1. Stromrichterantrieb mit einer Synchronmaschine (1) und einem Wellenlagegeber (2), dessen Ausgang mit dem Adresseneingang eines Festwertspeichers (IO) elektrisch verbunden ist, in welchem die Kodes der Dauer und der Polarität von Impulsen zur Speisung der Wicklungen der Synchronmaschine (1) eingeschrieben sind und dessen Ausgangsbus an die Steuereingänge (11) von Kode-Impulsdauer-Wandlern (12) entsprechend der Zahl von Wicklungen der Synchronmaschine (1) angeschlossen ist, deren Ausgänge an den Eingängen (I7) zur Vorgabe der Impulsdauer von Schaltern (I8) nach der Zahl von Wicklungen der Synchronmaschine (I) liegen, bei denen die Eingänge (26) zur Vorgabe der Impulspolarität mit den entsprechenden Ausgängen des Festwertspeichers (IO) verbunden sind und bei denen die Eingänge (27) zur Vorgabe der Steuersignalpolarität zusammengeschaltet sind und zur Anlegung eines die Steuersignalpolarität kennzeichnenden Signals dienen, während die Ausgänge der Schalter (I8) an die Wicklungen der Synchronmaschine (1) angeschlossen sind, sowie mit einem zur Schaltung des Antriebs gehörenden Steuergenerator (32), bei dem der Ausgang an Eingang (31) eines gesteuerten Frequenzteilers (28) liegt, auf dessen Steuereingang (29) der Kode des Steuersignalbetrags gegeben wird und bei dem der Ausgang an die Eingänge (30) zur Impulsfrequenzvorgabe der Kode-Impulsdauer-Wandler (12) angeschlossen ist, und auch mit einer an die Schalter (18) angeschlossen Spannungsquelle (25), g e k e n n z e i c h n e t   d u r c h   einen Spannungs-Impulsfolgeperiode-Wandler (34), bei welchem der erste Eingang (35) an der Spannungsquelle (25) liegt, der zweite Eingang (33) an den Ausgang des Steuergenerators (32) angeschlossen ist und der Ausgang mit den Eingängen (36) zur Aktivierung der Kode-Impulsdauer-Wandler (12) verbunden ist.

2. Stromrichterantrieb nach Anspruch 1, d a d u r - c h   g e k e n n z e i c h n e t, dass der Spannungs-Impulsfolgeperiode-Wandler (34) einen Analog-Digital-Wandler (37) enthält, dessen Eingang als erster Eingang (35) des Spannungs-Impulsfolgeperiode-Wandlers (34) benutzt wird, sowie einen gesteuerten Frequenzteiler (38) aufweist, bei dem der Steuereingang am Ausgang des Analog-Digital-Wandlers (37) liegt und der andere Eingang sowie der Ausgang als zweiter Eingang (33) bzw. als Ausgang des Spannungs-Impulsfolgeperiode-Wandlers (34) dienen.

# INTERNATIONAL SEARCH REPORT

International Application No  PCT/SU 87/00055

## I. CLASSIFICATION OF SUBJECT MATTER (if several classification symbols apply, indicate all) *

According to International Patent Classification (IPC) or to both National Classification and IPC

IPC⁴: H 02 K 29/06, H 02 P 6/02

## II. FIELDS SEARCHED

### Minimum Documentation Searched [7]

| Classification System | Classification Symbols |
|---|---|
| IPC⁴: | H 02 K 29/00 – 29/14, H 02 P 6/00, 6/02 |

Documentation Searched other than Minimum Documentation
to the Extent that such Documents are Included in the Fields Searched [8]

## III. DOCUMENTS CONSIDERED TO BE RELEVANT [9]

| Category * | Citation of Document, [11] with indication, where appropriate, of the relevant passages [12] | Relevant to Claim No. [13] |
|---|---|---|
| A | SU, A1, 1029368, (A.A. Ivanov et al.), 15 July 1983, see page 2, column 3, lines 51-58, column 4, column 5, lines 1-5, figure 1 _._ | 1 |
| A | US, A, 4250435, (General Electrical Company), 10 February 1981, see column 7, lines 35-68, column 8, lines 1-16, column 9, lines 17-24, column 10, lines 37-67, figures 3,4 _._ | 1 |
| A | US, A, 4270074, (The Singer Company), 26 May 1981, see figure 2 | 1 |

* Special categories of cited documents: [10]

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art.

"&" document member of the same patent family

## IV. CERTIFICATION

| Date of the Actual Completion of the International Search | Date of Mailing of this International Search Report |
|---|---|
| 21 December 1987 (21.12.87) | 20 January 1988  (20.01.88) |
| International Searching Authority | Signature of Authorized Officer |
| ISA/SU | |

Form PCT/ISA/210 (second sheet) (January 1985)